# EUROPEAN PATENT SPECIFICATION

(11) **EP 0 776 129 B1**
(45) Date of publication and mention of the grant of the patent: **04.04.2007**
(21) Application number: 96307398.6
(22) Date of filing: 10.10.1996
(51) Int. Cl.: H04N 7/08

(54) **Apparatus for transmitting/receiving a ghost-cancelling reference signal in PAL TV signal**
Vorrichtung zum Senden/Empfangen eines Geisterbildauslöschungsreferenzsignals in einem PAL-TV-Signal
Appareil pour la transmission/réception d'un signal de référence de suppression d'image fantôme dans un signal de télévision PAL

(30) Priority: 21.11.1995 KR 9542558
(43) Date of publication of application: 28.05.1997
(73) Proprietor: LG ELECTRONICS INC., Seoul (KR)
(72) Inventor: Kwon, Sung Jae, Dangsan2-Dong Youngdungpo-Ku Seoul (KR)
(74) Representative: McLeish, Nicholas Alistair Maxwell

(56) References cited:
- GB-A- 2 259 629
- US-A- 5 309 235
- US-A- 5 341 177
- US-A- 5 363 144
- GARDINER P N ET AL: "Ghost cancellation for 625-line systems" IBC 94. INTERNATIONAL BROADCASTING CONVENTION (CONF. PUBL. NO.397), PROCEEDINGS OF 1994 INTERNATIONAL BROADCASTING CONVENTION - IBC'94, AMSTERDAM, NETHERLANDS, 16-20 SEPT. 1994, pages 673-678, XP002098082 1994, London, UK, IEE, UK

## Description

### Background of the Invention

The present invention relates to the PAL TV system that is mostly used in Europe, China and East Asia, and more particularly, to apparatus for transmitting/receiving a ghost canceling reference (GCR) signal in PAL TV in which a GCR signal is produced by a ternary sequence at a transmitting port, thereby canceling a ghost produced by characteristics of a transmitting channel at the receiving port using the GCR signal.

Generally, according to characteristics of the transmitting channel of a TV, a signal received at the receiving port contains a ghost produced by a signal transmitted to the transmitting port.

The ghost causes bad effects on picture quality. For this reason, NTSC TV cancels it at the receiving port, using a ternary sequence GCR signal with high energy and correlation gain which is transmitted at the transmitting port to a vertical blanking interval (VBI) of a TV signal.

However, the conventional ghost canceling apparatus is used only for the NTSC mode in canceling the ghost. The PAL mode does not transmit the GCR signal so that it is hard to cancel the ghost in a TV receiver of PAL mode.

US 5,363,144 discloses a television ghost cancelling technique using a ternary sequence ghost cancellation reference signal. Gardiner et al, "Ghost cancellation for 625-line systems", Proceedings of the International Broadcasting Convention 1994, Amsterdam, September 1994, discusses ghost cancellation in the PAL television system.

### Summary of the Invention

Preferred embodiments of the present invention seek to address the problems of the prior art, and it is a main object of these embodiments to provide apparatus for transmitting/receiving a GCR signal in the PAL mode, which transmits a ternary sequence GCR signal to a certain line inside VBI of every even field in the PAL mode, thereby cancelling the ghost at the receiving port.

Accordingly, the invention provides an apparatus for transmitting a ghost-cancelling reference signal in a TV system as set out in Claim 1 and a corresponding apparatus for receiving as set out in Claim 14.

### Brief Description of the Attached Drawings

FIG. 1 is a block diagram of a ghost canceling reference signal transmitting apparatus embodying the present invention;
FIGS. 2A, 2B and 2C are detailed block diagrams of FIG 1;
FIG. 3 is a diagram showing a ternary sequence applied to an embodiment of the present invention;
FIG. 4 is a frequency characteristic diagram of a low-pass filter (LPF) applied to an embodiment of the present invention;
FIGS. 5A-5D show ghost canceling reference signal waveforms of positive and negative polarities attained by an embodiment of the present invention in PAL B&G and PAL D&K modes;
FIG. 6 is a block diagram of an embodiment of the present invention to produce the ghost canceling reference signal;
FIG. 7 is a waveform of an embodiment of the present invention to explain the transmitting sequence of the ghost canceling reference signal;
FIG. 8 is a block diagram showing a ghost canceling reference signal receiving apparatus embodying the present invention;
FIG. 9 is a waveform diagram to explain the operation of the operating part shown in FIG. 8 ;
FIG. 10 is a diagram which shows one example of a finite impulse response filter (FIR filter) related to the digital filter of FIG 8; and
FIGS. 11A-11E are waveform diagrams to explain the operation of the FIR filter of FIG 10.

### Detailed Description of Preferred Embodiments

Preferred embodiments of the apparatus for transmitting/receiving ghost-canceling reference signal of the present invention are detailedly described hereinafter with reference to the attached drawings.

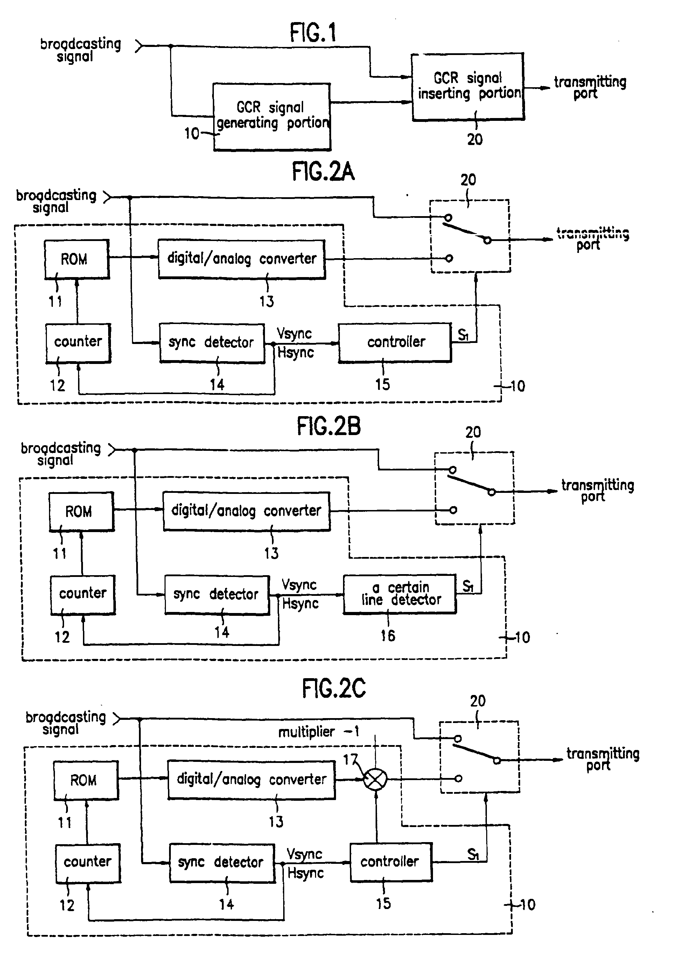

Referring to FIG. 1, the apparatus for transmitting/receiving ghost-canceling reference signal is comprised of a GCR signal generating portion 10 and GCR signal inserting portion 20. GCR signal generating portion 10 detects vertical and horizontal sync signals Vsync and Hsync from a broadcasting signal, catches a certain line on which a ternary sequence GCR signal will be loaded, from the broadcasting signal, and finally loads the waveform of the ternary sequence GCR signal on the certain line caught. The GCR signal inserting portion 20 selects the ternary sequence GCR signal produced from the GCR signal generating portion 10, only in the certain caught line, and selects and outputs a program to be broadcast in other lines.

As shown in FIG. 2A, GCR signal generating portion 10 is composed of a read only memory (ROM) 11 for storing the ternary sequence GCR signal of positive and negative polarities, a counter 12 for controlling the output of ROM 11, a digital/analog converter 13 for converting ROM 11's output signal into an analog signal, a sync detector 14 for detecting vertical and horizontal sync signals Vsync and Hsync from a broadcasting program signal, and a controller 15 for detecting a certain line where the ternary sequence GCR signal is loaded, from the output of sync detector 14, to thereby output a switching controlling signal S1.

Ghost canceling signal inserting portion 20 is composed of a 2:1 multiplexer or an analog switch which selectively outputs the output of digital/analog converter 13 or the output of the broadcasting program according to switching control signal S1 of controller 15.

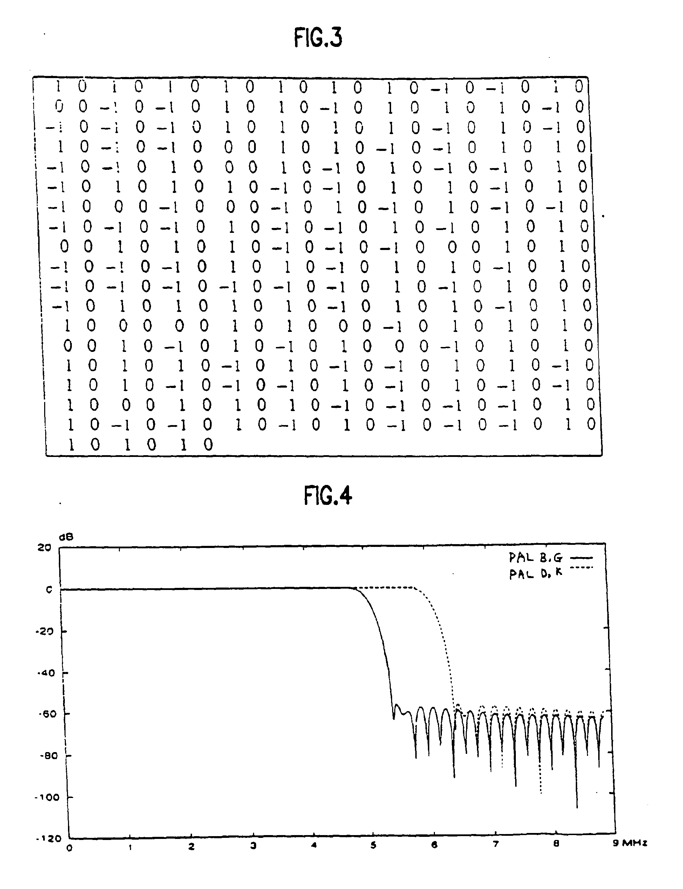

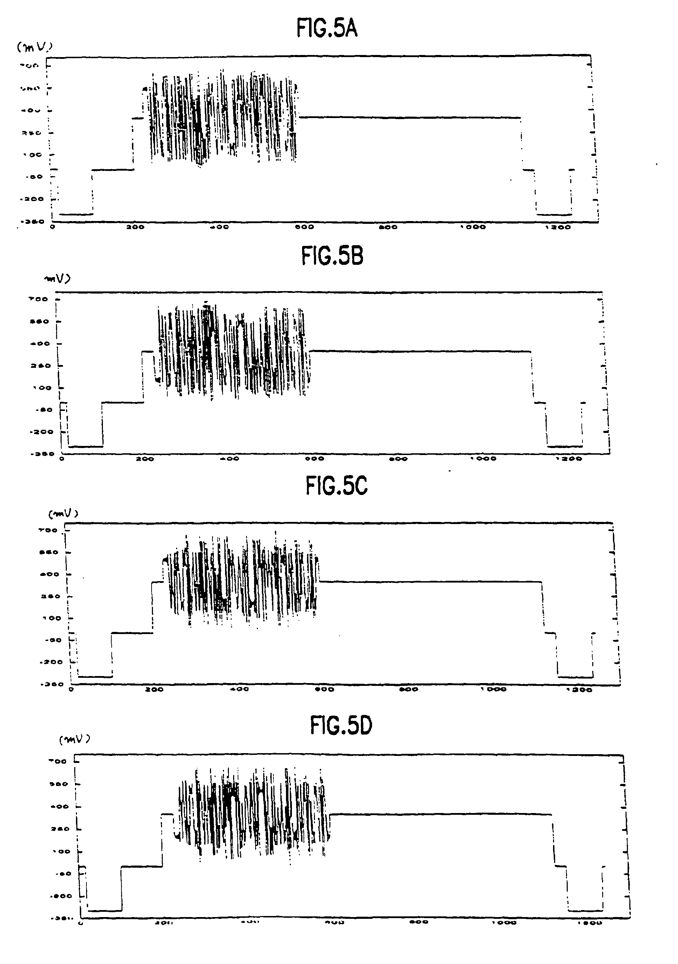

As shown in FIG. 3, the ghost canceling reference signal transmitting apparatus composed as above, produces a 494-long ternary sequence GCR signal from a 366-long ternary sequence, using a low-pass filter having frequency characteristics of FIG. 4.

The original length of the ternary sequence is 183. However, this length becomes 366 by inserting 0 for every sample so that interference between symbols is reduced. The full line of FIG. 4 is indicated to produce a PAL B&G (for European) GCR signal whose cut-off frequency is 5MHz, whereas the dotted line is to produce a PAL D&K (for Chinese) GCR signal whose cut-off frequency is 6MHz.

FIG. 5 shows the ternary sequence GCR signal of positive and negative polarities attained using the ternary sequence of FIG. 3 and the low-pass filter having frequency characteristics of FIG. 4. FIGS. 5A and 5B show GCR signal waveforms of positive and negative polarities for PAL B&G, respectively, FIGS. 5C and 5D showing GCR signal waveforms of positive and negative polarities for PAL D&K, respectively.

FIGS. 5A-5D are signal waveforms attained by amplitude-scaling the ternary sequence GCR signal passing through the low-pass filter with characteristics of FIG. 4.

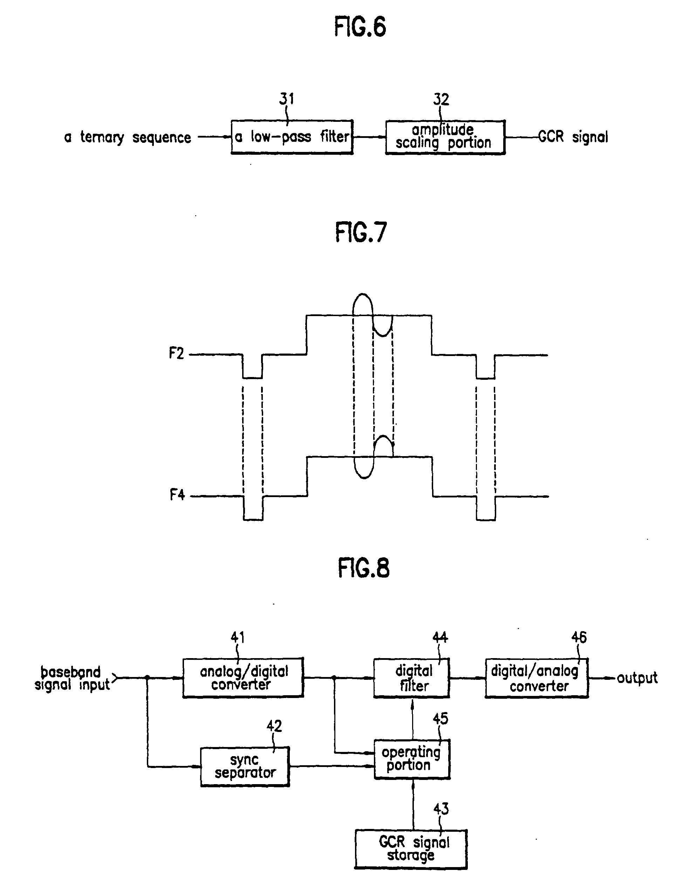

That is, the ternary sequence GCR signal to be used is converted into signal waveforms like FIGS. 5A-5D through low-pass filter 31 with frequency characteristics of FIG. 4 and through amplitude scaling portion 32 which amplitude-scales the output of low-pass filter 31, as shown in FIG. 6.

The ternary sequence GCR signal attained by the ternary sequence passing through low-pass filter 31 and amplitude scaling portion 32 as above is stored in ROM 11 shown in FIG. 2A, 2B or 2C. The output of ROM 11 is output as an analog signal sequentially through digital/analog converter 13 according to a counter 12.

From vertical and horizontal sync signals Vsync and Hsync detected from sync detector 14, controller 15 senses a certain line on which the ternary sequence GCR signal will be loaded to thereby control switching of the multiplexer of GCR signal inserting portion 20. In this state, the ternary sequence GCR signal is inserted into a certain line of a broadcasting program, and transmitted through a transmitting port.

The ternary sequence GCR signal is transmitted by an 8 field transmitting sequence as shown in Table 1 below (since one period of signal is eight fields in the PAL TV, whereas the period is four fields in the NTSC TV). The GCR signal is loaded on one certain line (line 318, for example) of VBI of every even field because the waveforms within the VBI of even and odd fields are different in the PAL TV.

**TABLE 1.**

| | | | | |
|---|---|---|---|---|
| FIELD NUMBER | 2 | 4 | 6 | 8 |
| GCR SIGNAL POLARITY | + | - | + | - |

As shown in Table 1, from second and sixth fields, the GCR signal of positive polarity (+) is sent. From the fourth and eighth fields, the GCR signal of negative polarity (-) is sent. That is, the polarity of the GCR signal is inverted for every frame; to improve its signal-to-noise (S/N) ratio and also cancel a sync and color burst at the receiving port. As a result, only the GCR signal is obtained.

For example, the polarity of the GCR signal becomes different in transmitting signals of the second field F2 and fourth field F4, as shown in FIG. 7 so that the sync and color burst are canceled and the amplitude of the GCR signal is doubled by subtracting the signals of the second and fourth fields. This finally improves the SIN ratio.

Here, parameters concerned will be given in Table 2 below, and the period between samples is a reciprocal (1/4f_{sc}) of 4 times (4f_{sc}) a color subcarrier frequency.

**TABLE 2.**

| | | |
|---|---|---|
| PAL TV | B & G | D & K |
| GCR SIGNAL HIGHEST FREQUENCY | 5MHz | 6MHz |
| PEDESTAL HEIGHT | 350mV | 350mV |
| PEDESTAL STARTING POINT | 177th SAMPLE | 177th SAMPLE |
| PEDESTAL ENDING POINT | 1100th SAMPLE | 1100th SAMPLE |
| GCR SIGNAL STARTING POINT | 213th SAMPLE | 213th SAMPLE |
| GCR SIGNAL LENGTH | 494 SAMPLES | 494 SAMPLES |
| GCR SIGNAL LOWEST LEVEL | 0mV | 0mV |
| GCR SIGNAL HIGHEST LEVEL | 700mV | 700mV |

Meanwhile, FIG. 2B shows another embodiment of GCR signal generating portion 10 which is comprised of a read only memory (ROM) 11 for storing the GCR signal of positive and negative polarities, a counter 12 for controlling the output of ROM 11, a digital/analog converter 13 for converting ROM 11's output signal to an analog, a sync detector 14 for detecting vertical and horizontal signals Vsync and Hsync from the broadcasting program signal, and a certain line detector 16 for outputting switching controlling signal S1 by detecting a certain line on which the ternary sequence GCR signal is to be loaded, from the output of sync detector 14. However, the operation of this embodiment is the same as that of the first embodiment so that the effects concerned will be omitted.

Furthermore, still another embodiment of GCR signal generating portion 10 is shown in FIG. 2C, which attains the GCR signal of positive and negative polarities by storing only the GCR signal of positive and negative polarities in ROM 11 and additionally providing a -1 multiplier 17 at the output port of digital/analog converter 13 for multiplying -1. The -1 multiplier inverts the output of ROM 11. In this case, the capacity of ROM 11 can be reduced.

Controller 15 should be constructed to control the multiplying operation of multiplier 17. For example, in case that only the GCR signal of positive polarity is stored in ROM 11, in order to attain the GCR signal of negative polarity, it must be multiplied by -1 in multiplier 17. In order to output the GCR signal of positive polarity, it must not be multiplied by -1 in multiplier 17.

FIG. 8 shows a block diagram of the receiving block of the PAL TV ghost-canceling reference signal transmitting/receiving apparatus which is composed of an analog/digital converter 41 for converting a baseband broadcasting signal input into a digital signal, a sync separator 42 for separating its sync signal from the baseband broadcasting signal input, a GCR signal storage 43 where the same GCR signal is stored as that stored in ROM 11 of the transmitting block, a digital filter 44 for canceling the ghost of the output of analog/digital converter 41 produced due to characteristics of the transmitting channel, an operating portion 45 for catching a line on which the GCR signal is loaded, from the output of sync separator 42, and subtracting as many as a predetermined number to thereby attain the GCR signal free from its sync signal and color burst and with an SIN ratio improved as well, and finally comparing the resultant GCR signal with the signal of GCR signal storage 43 to obtain a filter coefficient of digital filter 44 needed in canceling the ghost produced due to characteristics of the transmitting channel, and a digital/analog converter 46 for converting the output of digital filter 44 into an analog signal. The GCR signal receiving apparatus composed as above may be put into a TV or VCR, or may be used independently.

The digital filter 44 is composed of a finite impulse response (FIR) And an infinite impulse response (IIR).

In a ghost canceling reference signal receiving apparatus composed as above, analog/digital converter 41 converts, into a digital signal, an analog signal input as a baseband signal into which the GCR signal transmitted from a broadcasting station as stated before is converted via a tuner and intermediate frequency demodulating port (not shown). The converted digital signal is output to a digital filter 44.

The sync separator 42 separates a sync signal from the baseband broadcasting signal input to thereby output a separated sync signal to operating portion 45. Sequentially, operating portion 45 catches a line on which the ternary sequence GCR signal is put, using the sync signal attained from sync separator 42 and subtracts by a predetermined number to thereby attain a GCR signal with its sync signal and color burst canceled and an S/N ratio improved.

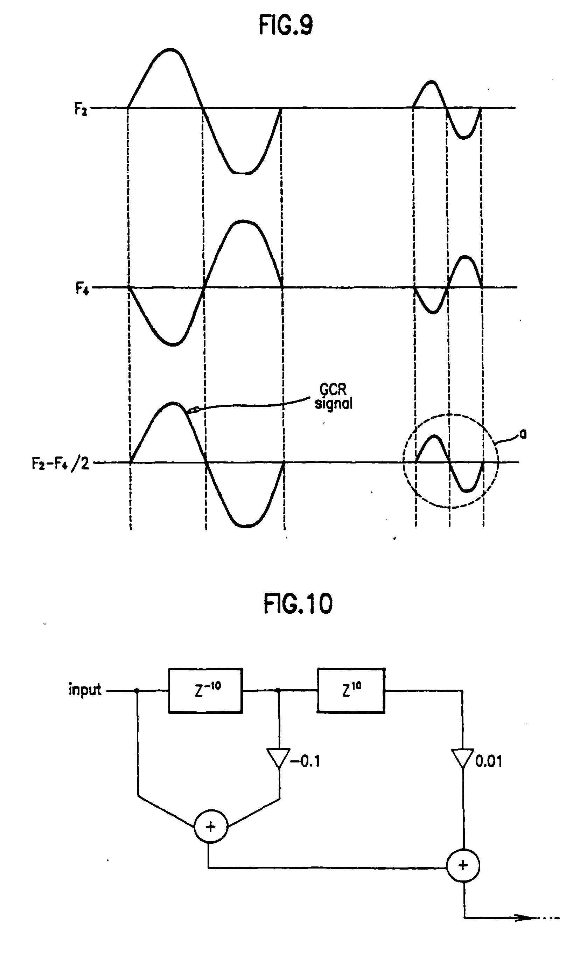

The operating portion 45 performs subtraction in groups by 8, 16 or 32 fields because the characteristics of the transmitting channel may be changed over time when too many fields are subtracted. For example, if field 4 (F4) is subtracted from field 2 (F2), in other words, when the average is taken by subtracting them, only a GCR signal free from sync signal and color burst is produced as shown in FIG 9. This GCR signal includes ghost signal (a) produced by the characteristics of the transmitting channel.

A ghost signal a remaining after subtraction in operating portion 45 is canceled by digital filter 44. Speaking in more detail, a ghost signal (a) is canceled upon comparing the GCR signal attained by subtraction in operating portion 45 with that stored in GCR signal storage 50, thereby non-real-time obtaining a coefficient of digital filter 44 needed in canceling the ghost produced due to characteristics of a transmitting channel, and then applying the coefficient to digital filter 44.

Therefore, in digital filter 44, its FIR filter cancels close-in ghost produced near the original ternary sequence GCR signal transmitted from the transmitting port, and the IIR filter cancels long ghost produced relatively far away, compared with the ghost canceling signal transmitted from the transmitting port. As a result, the ghost produced due to the characteristics of the transmitting channel is completely canceled.

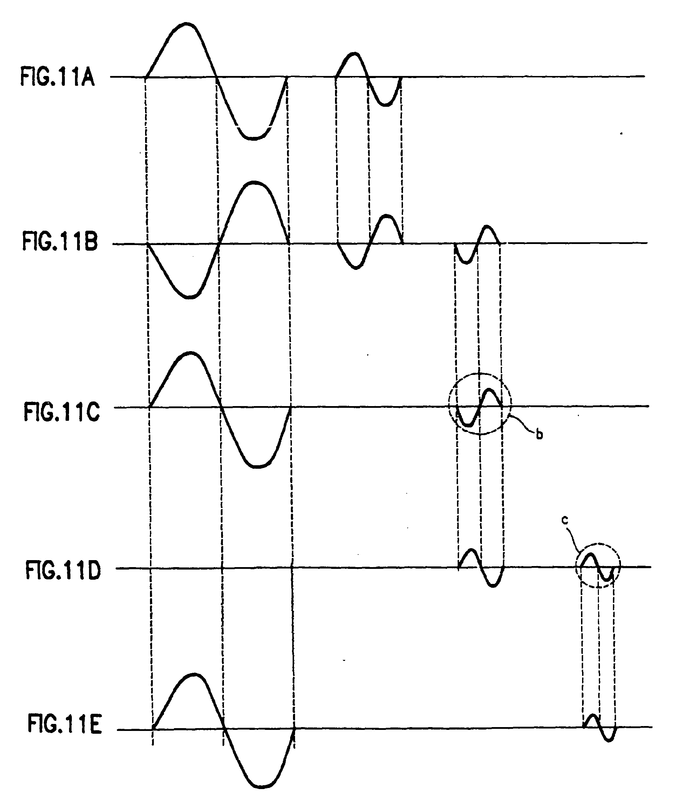

When explaining this procedure with reference to FIGS. 10, and 11A-11E, upon the FIR filter being configured as shown in FIG. 10 by the FIR filter coefficient attained from operating portion 45, a signal shown in FIG. 11B is obtained by letting the signal, which is attained through the aforementioned subtraction and shown in FIG. 11A, pass through a c7eiav (Z⁻¹⁰) and then a -0.1 multiplier.

When the signal of FIG. 11B is added to the signal that is originally input to the delay (Z⁻¹⁰), a signal like FIG. 11C is attained to cancel, as a result, a ghost produced due to the characteristics of the transmitting channel. However, in this case, a secondary ghost b is produced.

When the signal of FIG. 11C is added to a signal of FIG. 11D that has passed through the delay (Z⁻¹⁰) and a 0.01 multiplier, the secondary ghost is canceled as seen in FIG. 11E. However, a third ghost c is produced.

Accordingly, the secondary and third ghosts are successively produced via the FIR filter. However, they can be completely canceled by the IIR filter composed of a filter coefficient attained from operating portion 45. A detailed explanation will be omitted because its principle is general.

The coefficient of digital filter 44 attained from operating portion 45 is downloaded to digital filter 44 during VBI, in order not to cause any effects on a picture. From this point on, a signal free from ghost is output from digital/analog converter 46 in real time.

In those embodiments of the present invention, a 366-long ternary sequence is used.

As discussed above, in the embodiments of the present invention a ternary sequence GCR signal used currently in NTSC mode may be adapted to PAL mode so that a ghost produced due to the characteristics of a transmitting channel is completely canceled even in PAL mode. In addition, those embodiments use a GCR signal made with a ternary sequence, rendering its energy and correlation gain higher.

The described embodiments are capable of canceling ghosts at high speed through correlative operation because the transmission occupying line of the GCR signal is one line within a vertical blanking interval, and a ternary sequence GCR signal composed of elements 1, 0, and -1 is used.

Accordingly, the GCR signal transmitting/receiving apparatus described is usefully adaptable to PAL TVs, VCRs and set-top boxes.

## Claims

1. An apparatus for transmitting a ghost-canceling reference signal in a TV system, said apparatus comprising:
transmitting means (10, 20) for loading a ternary sequence ghost cancelling reference signal on a certain line of a broadcasting signal and thereby transmitting the loading result;
**characterised in that** said TV system is a PAL TV system and said transmitting means is adapted to provide said ternary sequence extended to 366 symbols by the insertion of a zero for each sample.

2. An apparatus for transmitting a ghost-canceling reference signal in a PAL TV system as claimed in Claim 1, wherein said ternary sequence ghost canceling reference signal is attained by making a ternary sequence pass through a low-pass filter (31) and then amplitude-scaled in an amplitude scaling portion (32).

3. An apparatus for transmitting a ghost-canceling reference signal in a PAL TV system as claimed in Claim 2, wherein said low-pass filter's cut-off frequency is 5MHz in PAL B&G mode, and 6MHz in PAL D&K mode.

4. An apparatus for transmitting a ghost-canceling reference signal in a PAL TV system as claimed in Claim 1, wherein said ternary sequence ghost-canceling reference signal is loaded within a vertical blanking interval of every even field.

5. An apparatus for transmitting a ghost-canceling reference signal in a PAL TV system as claimed in Claim 1, wherein said transmitting means transmits said ternary sequence ghost-canceling reference signal upon inverting it for every frame.

6. An apparatus for transmitting a ghost-canceling reference signal in a PAL TV system as claimed in Claim 7, wherein said ternary sequence ghost-canceling reference signal transmits a ghost-canceling reference signal of positive polarity in second and sixth fields and a ghost-canceling reference signal of negative polarity in fourth and eighth fields.

7. An apparatus for transmitting a ghost-canceling reference signal in a PAL TV system as claimed in Claim 1, said apparatus comprising:
a ghost-canceling reference signal generating portion (10) for detecting vertical and horizontal sync signals from a broadcasting signal, catching a certain line on which the ternary sequence ghost-canceling reference signal will be loaded, from the broadcasting signal, and finally loading the ternary sequence ghost-canceling reference signal on said certain line caught; and
a ghost-canceling reference signal inserting portion (20) for, only in said certain line caught, selecting said ternary sequence ghost-canceling reference signal produced from said ghost-canceling reference signal generating portion, in other lines, said portion selecting and transmitting said broadcasting signal.

8. An apparatus for transmitting a ghost-canceling reference signal in a PAL TV system as claimed in Claim 7, wherein said ghost-canceling reference signal generating portion (10), is comprised of:
a ROM (11) for storing said ternary sequence ghost-canceling reference signal of positive and negative polarities;
a counter (12) for controlling the output of said ROM;
a digital/analog converter (13) for converting said ROM's output signal into an analog signal;
a sync detector (14) for detecting vertical and horizontal sync signals from said broadcasting signal; and
a controller (15) for detecting a certain line where a ghost-canceling signal will be loaded, from the output of said sync detector, to thereby output a switching control signal of said ghost-canceling reference signal inserting portion.

9. An apparatus for transmitting a ghost-canceling reference signal in a PAL TV system as claimed in Claim 7, wherein said ghost-canceling reference signal generating portion is comprised of:
a ROM (11) for storing said ternary sequence ghost-canceling reference signal of positive and negative polarities;
a counter (12) for controlling the output of said ROM;
a digital/analog converter (13) for converting said ROM's output signal into an analog signal;
a sync detector (14) for detecting vertical and horizontal sync signals from said broadcasting signal; and
a certain line detector (16) for detecting a certain line where said ternary sequence ghost-canceling reference signal will be loaded, from the output of said sync detector, to thereby output a switching control signal of said ghost-canceling reference signal inserting portion.

10. An apparatus for transmitting a ghost-canceling reference signal in PAL TV system as claimed in Claim 7, wherein said ghost-canceling reference signal generating portion is comprised of:
a ROM (11) for storing said ternary sequence ghost-canceling reference signal of positive and negative polarities;
a counter (12) for controlling the output of said ROM;
a digital/analog converter (13) for converting said ROM's output signal into an analog signal;
a -1 multiplier (17) for selectively inverting the output of said digital/analog converter;
a sync detector (14) for detecting vertical and horizontal sync signals from said broadcasting signal; and
a controller (15) for detecting a certain line where said ternary sequence ghost-canceling reference signal will be loaded, from the output of said sync detector, to thereby output a multiplication control signal of said -1 multiplier and a switching control signal.

11. An apparatus for transmitting a ghost-canceling reference signal in a PAL TV system as claimed in Claim 7, wherein said ghost-canceling reference signal inserting portion is comprised of a multiplexer (20) for selectively outputting the output of said digital/analog converter or said broadcasting signal according to a switching control signal of said controller.

12. An apparatus for transmitting a ghost-canceling reference signal in a PAL TV system as claimed in Claim 7, wherein said ghost-canceling reference signal inserting portion is comprised of a switch (20) for selectively outputting the output of said digital/analog converter or said broadcasting signal according to a switching control signal of said controller.

13. An apparatus for transmitting a ghost-canceling reference signal in a PAL TV system as claimed in Claims 1 to 12, said apparatus further comprising:
receiving means for cancelling a ghost produced by characteristics of a transmitting channel using said ternary sequence ghost cancelling reference signal transmitted from said transmitting means.

14. Apparatus for receiving a PAL TV broadcasting signal transmitted through a transmitting channel, and cancelling a ghost produced by characteristics of the transmitting channel, comprising:
means (41, 42, 45) for receiving a ternary sequence ghost-cancelling reference signal loaded on a certain line of the broadcasting signal,
**characterised in that** the apparatus further comprises:
a ghost-cancelling reference signal storage (43) storing a transmitted ternary sequence ghost cancelling signal, wherein said ternary sequence is extended to 366 symbols by the insertion of a zero for each sample; and
means (44, 45) adapted to cancel the ghost using the received ternary sequence ghost cancelling reference signal and the transmitted ternary sequence ghost cancelling signal.

15. The apparatus as claimed in Claim 14, wherein said received ternary sequence ghost-canceling reference signal is loaded within a vertical blanking interval of every even field.

16. The apparatus as claimed in Claim 14, wherein the received ternary sequence ghost-canceling reference signal is inverted for every frame.

17. The apparatus as claimed in Claim 16, wherein said received ghost-canceling reference signal is of positive polarity in second and sixth fields and of negative polarity in fourth and eighth fields.

18. The apparatus as claimed in Claim 14, said apparatus further comprising:
a sync separator (42) for separating a sync signal from a baseband broadcasting signal input;
a digital filter (44) for cancelling a ghost produced due to characteristics of a transmitting channel from said baseband broadcasting signal input; and
an operating portion (45) for catching a line where said ternary sequence ghost-canceling reference signal is loaded, from the output of said sync separator, thereby attaining said ternary sequence ghost-canceling reference signal, and then comparing it with a signal of said ghost-canceling reference signal storage, to thereby obtain a coefficient of said digital filter.

19. The apparatus as claimed in Claim 18, wherein said operating portion (45) catches a line for every even field where said ternary sequence ghost-canceling reference signal is loaded, using said sync signal separated from said sync separator (42), attains a ghost-canceling reference signal by performing subtractions by a predetermined number, and then compares said ghost-canceling reference signal with the signal of said ghost-canceling reference signal storage, to thereby obtain a coefficient of said digital filter needed in cancelling a ghost produced due to characteristics of a transmitting channel.

20. The apparatus as claimed in Claim 19, wherein said subtraction is made in groups by 8, 16, or 32 fields.

21. The apparatus as claimed in Claim 19, wherein said digital filter is comprised of:
a finite impulse response filter for cancelling a close-in ghost; and
an infinite impulse response filter for cancelling a long ghost.

22. The apparatus as claimed in Claim 19, wherein said receiving means further comprises:
an analog/digital converter (41) for converting said baseband broadcasting signal input into a digital signal, and outputting it to said digital filter and operating portion; and
a digital/analog converter (46) for converting the output of said digital filter into an analog signal.

## Patentansprüche

1. Vorrichtung zum Senden eines Geisterbildauslöschungsreferenzsignals in einem TV-System, wobei die Vorrichtung umfasst:
ein Sendemittel (10, 20) zum Laden eines ternärsequentiellen Geisterbildauslöschungsreferenzsignals auf eine bestimmte Zeile eines Übertragungssignals und wobei dabei das Ladeergebnis gesendet wird;
**dadurch gekennzeichnet, dass** das TV-System ein PAL-TV-System ist und das Sendemittel angepasst ist, die auf 366 Symbole erweiterte ternäre Sequenz durch Einfügen einer Null für jeden Abtastwert bereitzustellen.

2. Vorrichtung zum Senden eines Geisterbildauslöschungsreferenzsignals in einem PAL-TV-System nach Anspruch 1, wobei das ternärsequentielle Geisterbildauslöschungsreferenzsignal durch Führen einer ternären Sequenz durch ein Tiefpassfilter (31) und dann amplitudenskaliert in ein Amplitudenskalierungsteil erlangt wird.

3. Vorrichtung zum Senden eines Geisterbildauslöschungsreferenzsignals in einem PAL-TV-System nach Anspruch 2, wobei die Grenzfrequenz des Tiefpassfilters in einem PAL B&G-Modus 5 MHz und in einem PAL D&K-Modus 6 MHz beträgt.

4. Vorrichtung zum Senden eines Geisterbildauslöschungsreferenzsignals in einem PAL-TV-System nach Anspruch 1, wobei das ternärsequentielle Geisterbildauslöschungsreferenzsignal in einer vertikalen Austastlücke jeden geradzahligen Halbbildes geladen wird.

5. Vorrichtung zum Senden eines Geisterbildauslöschungsreferenzsignals in einem PAL-TV-System nach Anspruch 1, wobei das Sendemittel das ternärsequentielle Geisterbildauslöschungsreferenzsignal nach Invertieren dieses für jedes Vollbild sendet.

6. Vorrichtung zum Senden eines Geisterbildauslöschungsreferenzsignals in einem PAL-TV-System nach Anspruch 7, wobei das ternärsequentielle Geisterbildauslöschungsreferenzsignal in zweiten und sechsten Halbbildern ein Geisterbildauslöschungsreferenzsignal mit einer positiven Polarität und in vierten und achten Halbbildern ein Geisterbildauslöschungsreferenzsignal mit einer negativen Polarität sendet.

7. Vorrichtung zum Senden eines Geisterbildauslöschungsreferenzsignals in einem PAL-TV-System nach Anspruch 1, wobei die Vorrichtung umfasst:
ein Generierungsteil (10) für ein Geisterbildauslöschungsreferenzsignal zum Detektieren vertikaler und horizontaler Synchronisierungssignale aus einem Übertragungssignal, wobei eine bestimmte Zeile aus dem Übertragungssignal, auf die das ternärsequentielle Geisterbildauslöschungsreferenzsignal geladen wird, einrastet, und wobei schließlich das ternärsequentielle Geisterbildauslöschungsreferenzsignal auf die bestimmte eingerastete Zeile geladen wird; und
ein Einfügeteil (20) für ein Geisterbildauslöschungsreferenzsignal zum Auswählen des ternärsequentiellen Geisterbildauslöschungsreferenzsignals, das von dem Generierungsteil für ein Geisterbildauslöschungsreferenzsignal generiert wird, nur in der bestimmten eingerasteten Zeile, wobei das Teil bei den anderen Zeilen das Übertragungssignal auswählt und sendet.

8. Vorrichtung zum Senden eines Geisterbildauslöschungsreferenzsignals in einem PAL-TV-System nach Anspruch 7, wobei das Generierungsteil (10) für ein Geisterbildauslöschungsreferenzsignal beinhaltet:
ein ROM (11) zum Speichern des ternärsequentiellen Geisterbildauslöschungsreferenzsignals mit positiven und negativen Polaritäten;
einen Zähler (12) zum Steuern der Ausgabe des ROMs;
einen Digital-Analog-Wandler (13) zum Umwandeln des Ausgabesignals des ROMs in ein analoges Signal;
einen Synchrondetektor (14) zum Erfassen vertikaler und horizontaler Synchronisierungssignale aus dem Übertragungssignal; und
eine Steuereinheit (15) zum Erfassen einer bestimmten Zeile aus der Ausgabe des Synchrondetektors, auf die ein Geisterbildauslöschungssignal geladen wird, um auf diese Weise ein Schaltsteuersignal des Einfügeteils für ein Geisterbildauslöschungsreferenzsignal auszugeben.

9. Vorrichtung zum Senden eines Geisterbildauslöschungsreferenzsignals in einem PAL-TV-System nach Anspruch 7, wobei das Generierungsteil für ein Geisterbildauslöschungsreferenzsignal beinhaltet:
ein ROM (11) zum Speichern des ternärsequentiellen Geisterbildauslöschungsreferenzsignals mit positiven und negativen Polaritäten;
einen Zähler (12) zum Steuern der Ausgabe des ROMs;
einen Digital-Analog-Wandler (13) zum Umwandeln des Ausgabesignals des ROMs in ein analoges Signal;
einen Synchrondetektor (14) zum Erfassen vertikaler und horizontaler Synchronisierungssignale aus dem Übertragungssignal; und
einen Eine-Bestimmte-Zeile-Detektor (16), zum Erfassen einer bestimmten Zeile aus der Ausgabe des Synchrondetektors, auf die das ternärsequentielle Geisterbildauslöschungsreferenzsignal geladen wird, um auf diese Weise ein Schaltsteuersignal des Einfügeteils für ein Geisterbildauslöschungsreferenzsignal auszugeben.

10. Vorrichtung zum Senden eines Geisterbildauslöschungsreferenzsignals in einem PAL-TV-System nach Anspruch 7, wobei das Generierungsteil für ein Geisterbildauslöschungsreferenzsignal umfasst:
ein ROM (11) zum Speichern des ternärsequentiellen Geisterbildauslöschungsreferenzsignals mit positiven und negativen Polaritäten;
einen Zähler (12) zum Steuern der Ausgabe des ROMs;
einen Digital-Analog-Wandler (13) zum Umwandeln des Ausgabesignals des ROMs in ein analoges Signal;
einen Minus1-Multiplizierer (17) zum selektiven Invertieren der Ausgabe des Digital-Analog-Wandlers;
einen Synchrondetektor (14) zum Erfassen vertikaler und horizontaler Synchronisierungssignale aus dem Übertragungssignal; und
eine Steuereinheit (15) zum Erfassen einer bestimmten Zeile aus der Ausgabe des Synchrondetektors, auf die das ternärsequentielle Geisterbildauslöschungsreferenzsignal geladen wird, um auf diese Weise ein Multiplikationssteuersignal des Minus1-Multiplizierers und ein Schaltsteuersignal auszugeben.

11. Vorrichtung zum Senden eines Geisterbildauslöschungsreferenzsignals in einem PAL-TV-System nach Anspruch 7, wobei das Generierungsteil für ein Geisterbildauslöschungsreferenzsignal einen Multiplexer (20) zum selektiven Ausgeben der Ausgabe des Digital-Analog-Wandlers oder des Übertragungssignals gemäß eines Schaltsteuersignals der Steuereinheit beinhaltet.

12. Vorrichtung zum Senden eines Geisterbildauslöschungsreferenzsignals in einem PAL-TV-System nach Anspruch 7, wobei das Einfügeteil für ein Geisterbildauslöschungsreferenzsignal einen Schalter (20) zum selektiven Ausgeben der Ausgabe des Digital-Analog-Wandlers oder des Übertragungssignals gemäß eines Schaltsteuersignals der Steuereinheit beinhaltet.

13. Vorrichtung zum Senden eines Geisterbildauslöschungsreferenzsignals in einem PAL-TV-System nach einem der Ansprüche 1 bis 12, wobei die Vorrichtung ferner umfasst:
Empfangsmittel zum Auslöschen eines Geisterbilds, das von Eigenschaften eines Sendekanals erzeugt ist, unter Verwendung des ternärsequentiellen Geisterbildauslöschungsreferenzsignals, das von dem Sendemittel gesendet wird.

14. Vorrichtung zum Empfangen eines PAL-TV Übertragungssignals, das über einen Sendekanal gesendet wird, und zum Auslöschen eines Geisterbilds, das von Eigenschaften des Sendekanals erzeugt ist, umfassend:
Mittel (41, 42, 45) zum Empfangen eines ternärsequentiellen Geisterbildauslöschungsreferenzsignals, das auf eine bestimmte Zeile des Übertragungssignals geladen ist,
**dadurch gekennzeichnet, dass** die Vorrichtung ferner umfasst:
einen Speicher für ein Geisterbildauslöschungsreferenzsignal (43), der ein gesendetes ternärsequentielles Geisterbildauslöschungssignal speichert, wobei die ternäre Sequenz durch Einfügen einer Null in jedem Abtastwert auf 366 Symbole erweitert ist; und
Mittel (44, 45), die geeignet sind, das Geisterbild unter Verwendung des empfangenen ternärsequentiellen Geisterbildauslöschungsreferenzsignals und des gesendeten ternärsequentiellen Geisterbildauslöschungssignals auszulöschen.

15. Vorrichtung nach Anspruch 14, wobei das empfangene ternärsequentielle Geisterbildauslöschungsreferenzsignal in einer vertikalen Austastlücke jeden geradzahligen Halbbildes geladen wird.

16. Vorrichtung nach Anspruch 14, wobei das empfangene ternärsequentielle Geisterbildauslöschungsreferenzsignal für jedes Vollbild invertiert ist.

17. Vorrichtung nach Anspruch 16, wobei das empfangene ternärsequentielle Geisterbildauslöschungsreferenzsignal in zweiten und sechsten Halbbildern eine positive Polarität und in vierten und achten Halbbildern eine negative Polarität aufweist.

18. Vorrichtung nach Anspruch 14, wobei die Vorrichtung ferner umfasst:
einen Synchronseparator (42) zum Separieren eines Synchronisierungssignals aus einer Basisbandübertragungssignaleingabe;
ein digitales Filter (44) zum Auslöschen eines Geisterbildes, das aufgrund von Eigenschaften eines Sendekanals erzeugt ist, aus der Basisbandübertragungssignaleingabe, und
ein Operationsteil (45) zum Einrasten einer Zeile aus der Ausgabe des Synchronseparators, auf die das ternärsequentielle Geisterbildauslöschungsreferenzsignal geladen wird, wobei auf dies Weise das ternärsequentielle Geisterbildauslöschungsreferenzsignal erlangt wird und wobei dieses dann mit einem Signal aus dem Geisterbildauslöschungsreferenzsignal-Speicher verglichen wird, um **dadurch** einen Koeffizienten des digitalen Filters zu erhalten.

19. Vorrichtung nach Anspruch 18, wobei das Operationsteil (45) unter Verwendung des aus dem Synchronseparator (42) separierten Signals für jedes geradzahlige Halbbild eine Zeile einrastet, auf welche das ternärsequentielle Geisterbildauslöschungsreferenzsignal geladen wird, durch Ausführen von Subtraktionen einer vorbestimmten Anzahl ein Geisterbildauslöschungsreferenzsignal erlangt, und dann das Geisterbildauslöschungsreferenzsignal mit dem Signal des Geisterbildauslöschungsreferenzsignal-Speichers vergleicht, um **dadurch** einen Koeffizienten des Digitalfilters zu erhalten, der zum Auslöschen eines Geisterbildes, das aufgrund von Merkmalen des Sendekanals erzeugt ist, benötigt wird.

20. Vorrichtung nach Anspruch 19, wobei die Subtraktion in Gruppen von 8, 16 oder 32 Halbbildern durchgeführt wird.

21. Vorrichtung nach Anspruch 19, wobei das digitale Filter besteht aus:
einem finiten Impulsantwortfilter zum Auslöschen eines Nah-Geisterbildes; und
einem finiten Impulsantwortfilter zum Auslöschen eines Fern-Geisterbildes.

22. Vorrichtung nach Anspruch 19, wobei das Empfangsmittel ferner umfasst:
einen Analog-Digital-Wandler (41) zum Umwandeln des Basisbandübertragungssignaleingangs in ein digitales Signal und zum Ausgeben dessen an das digitale Filter und das Operationsteil; und
einen Analog-Digital-Wandler (46) zum Umwandeln der Ausgabe des digitalen Filters in ein analoges Signal.

## Revendications

1. Appareil pour l'émission d'un signal de référence supprimant l'image fantôme dans un système de télévision, ledit appareil comportant :
un moyen d'émission (10, 20) destiné à charger un signal de référence supprimant l'image fantôme de séquence ternaire sur une certaine ligne d'un signal de diffusion et à émettre ainsi le résultat du chargement ;
**caractérisé en ce que** ledit système de télévision est un système de télévision PAL et ledit moyen d'émission est conçu pour produire ladite séquence ternaire étendue à 366 symboles par l'insertion d'un zéro pour chaque échantillon.

2. Appareil pour l'émission d'un signal de référence supprimant l'image fantôme dans un système de télévision PAL selon la revendication 1, dans lequel ledit signal de référence supprimant l'image fantôme de séquence ternaire est obtenu en faisant passer une séquence ternaire à travers un filtre passe-bas (31) puis en soumettant son amplitude à une mise à l'échelle dans une partie (32) de mise à l'échelle de l'amplitude.

3. Appareil pour l'émission d'un signal de référence supprimant l'image fantôme dans un système de télévision PAL selon la revendication 2, dans lequel la fréquence de coupure du filtre passe-bas est de 5 MHz dans un mode PAL B&G, et de 6 MHz dans un mode PAL D&K.

4. Appareil pour l'émission d'un signal de référence supprimant l'image fantôme dans un système de télévision PAL selon la revendication 1, dans lequel ledit signal de référence supprimant l'image fantôme de séquence ternaire est chargé dans un intervalle de suppression verticale de chaque trame paire.

5. Appareil pour l'émission d'un signal de référence supprimant l'image fantôme dans un système de télévision PAL selon la revendication 1, dans lequel ledit moyen d'émission émet ledit signal de référence supprimant l'image fantôme de séquence ternaire en l'inversant pour chaque image complète.

6. Appareil pour l'émission d'un signal de référence supprimant l'image fantôme dans un système de télévision PAL selon la revendication 7, dans lequel ledit signal de référence supprimant l'image fantôme de séquence ternaire transmet un signal de référence supprimant l'image fantôme d'une polarité positive dans des deuxième et sixième trames et un signal de référence supprimant l'image fantôme de polarité négative dans des quatrième et huitième trames.

7. Appareil pour l'émission d'un signal de référence supprimant l'image fantôme dans un système de télévision PAL selon la revendication 1, ledit appareil comportant :
une partie (10) de génération d'un signal de référence supprimant l'image fantôme pour détecter des signaux de synchronisation verticale et horizontale à partir d'un signal de diffusion, accrocher une certaine ligne sur laquelle le signal de référence supprimant l'image fantôme de séquence ternaire sera chargé, à partir du signal du signal de diffusion, et charger enfin le signal de référence supprimant l'image fantôme de séquence ternaire sur ladite certaine ligne accrochée ; et
une partie (20) d'insertion de signal de référence supprimant l'image fantôme pour, seulement dans ladite certaine ligne accrochée, sélectionner ledit signal de référence supprimant l'image fantôme de séquence ternaire produit à partir de ladite partie de génération de signal de référence supprimant l'image fantôme, dans d'autres lignes, ladite partie sélectionnant et émettant ledit signal de diffusion.

8. Appareil pour l'émission d'un signal de référence supprimant l'image fantôme dans un système de télévision PAL selon la revendication 7, dans lequel ladite partie (10) de génération du signal de référence supprimant l'image fantôme est constituée de :
une mémoire ROM (11) destinée à stocker ledit signal de référence supprimant l'image fantôme de séquence ternaire de polarités positive et négative ;
un compteur (12) destiné à commander la sortie de ladite mémoire ROM ;
un convertisseur numérique/analogique (13) destiné à convertir le signal de sortie de la mémoire ROM en un signal analogique ;
un détecteur (14) de synchronisation destiné à détecter des signaux de synchronisation verticale et horizontale à partir dudit signal de diffusion.; et
une unité de commande (15) destinée à détecter une certaine ligne où un signal de suppression d'image fantôme sera chargé, à partir du signal de sortie dudit détecteur de synchronisation, pour délivrer ainsi en sortie un signal de commande de commutation de ladite partie d'insertion du signal de référence supprimant l'image fantôme.

9. Appareil pour l'émission d'un signal de référence supprimant l'image fantôme dans un système de télévision PAL selon la revendication 7, dans lequel ladite partie de génération du signal de référence supprimant l'image fantôme est constituée de :
une mémoire ROM (11) destinée à stocker ledit signal de référence supprimant l'image fantôme de séquence ternaire de polarités positive et négative ;
un compteur (12) destiné à commander la sortie de ladite mémoire ROM ;
un convertisseur numérique/analogique (13) destiné à convertir le signal de sortie de la mémoire ROM en un signal analogique ;
un détecteur (14) de synchronisation destiné à détecter des signaux de synchronisation verticale et horizontale à partir dudit signal de diffusion ; et
un détecteur (16) d'une certaine ligne destiné à détecter une certaine ligne où ledit signal de référence supprimant l'image fantôme de séquence ternaire sera chargé, d'après le signal de sortie dudit détecteur de synchronisation, pour délivrer ainsi en sortie un signal de commande de commutation de ladite partie d'insertion de signal de référence supprimant l'image fantôme.

10. Appareil pour l'émission d'un signal de référence supprimant l'image fantôme dans un système de télévision PAL selon la revendication 7, dans lequel ladite partie de génération du signal de référence supprimant l'image fantôme est constituée de :
une mémoire ROM (11) destinée à stocker ledit signal de référence supprimant l'image fantôme de séquence ternaire de polarités positive et négative ;
un compteur (12) destiné à commander la sortie de ladite mémoire ROM ;
un convertisseur numérique/analogique (13) destiné à convertir le signal de sortie de la mémoire ROM en un signal analogique ;
un multiplicateur (17) par -1 destiné à inverser sélectivement le signal de sortie dudit convertisseur numérique/analogique ;
un détecteur (14) de synchronisation destiné à détecter des signaux de synchronisation verticale et horizontale à partir dudit signal de diffusion ; et
une unité de commande (15) destinée à détecter une certaine ligne où ledit signal de référence supprimant l'image fantôme de séquence ternaire sera chargé, d'après le signal de sortie dudit détecteur de synchronisation, pour délivrer ainsi en sortie un signal de commande de multiplication dudit multiplicateur par -1 et un signal de commande de commutation.

11. Appareil pour l'émission d'un signal de référence supprimant l'image fantôme dans un système de télévision PAL selon la revendication 7, dans lequel ladite partie d'insertion du signal de référence supprimant l'image fantôme est constituée d'un multiplexeur (20) pour délivrer sélectivement en sortie le signal de sortie dudit convertisseur numérique/analogique ou ledit signal de diffusion conformément à un signal de commande de commutation de ladite unité de commande.

12. Appareil pour l'émission d'un signal de référence supprimant l'image fantôme dans un système de télévision PAL selon la revendication 7, dans lequel ladite partie d'insertion du signal de référence supprimant l'image fantôme est constituée d'un commutateur (20) destiné à délivrer sélectivement en sortie le signal de sortie dudit convertisseur numérique/analogique ou ledit signal de diffusion conformément à un signal de commande de commutation de ladite unité de commande.

13. Appareil pour l'émission d'un signal de référence supprimant l'image fantôme dans un système de télévision PAL selon les revendications 1 à 12, ledit appareil comportant en outre :
un moyen de réception destiné à supprimer une image fantôme produite par des caractéristiques d'un canal de transmission utilisant ledit signal de référence supprimant l'image fantôme de séquence ternaire transmis depuis ledit moyen d'émission.

14. Appareil pour la réception d'un signal de diffusion de télévision PAL transmis par un canal de transmission, et la suppression d'une image fantôme produite par des caractéristiques du canal de transmission, comportant :
un moyen (41, 42, 45) destiné à recevoir un signal de référence supprimant l'image fantôme de séquence ternaire chargé sur une certaine ligne du signal de diffusion,
**caractérisé en ce que** l'appareil comporte en outre :
une mémoire (43) de signal de référence supprimant l'image fantôme stockant un signal supprimant l'image fantôme de séquence ternaire émis, dans lequel ladite séquence ternaire est étendue à 366 symboles par l'insertion d'un zéro pour chaque échantillon ; et
un moyen (44, 45) conçu pour supprimer l'image fantôme en utilisant le signal de référence supprimant l'image fantôme de séquence ternaire reçu, et le signal supprimant l'image fantôme de séquence ternaire émis.

15. Appareil selon la revendication 14, dans lequel ledit signal de référence supprimant l'image fantôme de séquence ternaire reçu est chargé dans un intervalle de suppression verticale de chaque trame paire.

16. Appareil selon la revendication 14, dans lequel le signal de référence supprimant l'image fantôme de séquence ternaire reçu est inversé pour chaque image complète.

17. Appareil selon la revendication 16, dans lequel ledit signal de référence supprimant l'image fantôme reçu est d'une polarité positive dans des deuxième et sixième trames et d'une polarité négative dans des quatrième et huitième trames.

18. Appareil selon la revendication 14, ledit appareil comportant en outre :
un séparateur (42) de synchronisation destiné à séparer un signal de synchronisation d'une entrée de signal de diffusion de bande de base ;
un filtre numérique (44) destiné à supprimer une image fantôme produite du fait de caractéristiques d'un canal de transmission depuis ladite entrée de signal de diffusion de bande de base ; et
une partie de travail (45) destinée à accrocher une ligne où ledit signal de référence supprimant l'image fantôme de séquence ternaire est chargé, du signal de sortie dudit séparateur de synchronisation, de manière à obtenir ainsi ledit signal de référence supprimant l'image fantôme de séquence ternaire, puis à le comparer à un signal de ladite mémoire de signal de référence supprimant l'image fantôme, pour obtenir ainsi un coefficient dudit filtre numérique.

19. Appareil selon la revendication 18, dans lequel ladite partie de travail (45) accroche une ligne pour chaque trame paire lorsque ledit signal de référence supprimant l'image fantôme de séquence ternaire est chargé, en utilisant ledit signal de synchronisation séparé dudit séparateur (42) de synchronisation, obtient un signal de référence supprimant l'image fantôme en effectuant des soustractions d'un nombre prédéterminé, puis compare ledit signal de référence supprimant l'image fantôme au signal de ladite mémoire de signal de référence supprimant l'image fantôme, pour obtenir ainsi un coefficient dudit filtre numérique nécessaire pour supprimer une image fantôme produite du fait de caractéristiques d'un canal de transmission.

20. Appareil selon la revendication 19, dans lequel ladite soustraction est effectuée en groupes de 8, 16 ou 32 trames.

21. Appareil selon la revendication 19, dans lequel ledit filtre numérique est constitué de :
un filtre à réponse impulsionnelle finie destiné à supprimer une image fantôme proche de la porteuse ; et
un filtre à réponse impulsionnelle finie destiné à supprimer une image fantôme éloignée.

22. Appareil selon la revendication 19, dans lequel ledit moyen de réception comporte en outre :
un convertisseur analogique/numérique (41) destiné à convertir en un signal numérique l'entrée du signal de diffusion de bande de base, et à le délivrer en sortie audit filtre numérique et à ladite partie de travail ; et
un convertisseur analogique/numérique (46) destiné à convertir le signal de sortie dudit filtre numérique en un signal analogique.
